# EUROPÄISCHE PATENTSCHRIFT

(11) **EP 3 899 878 B1**
(45) Veröffentlichungstag und Bekanntmachung des Hinweises auf die Patenterteilung: **02.09.2026**
(21) Anmeldenummer: 19836484.6
(22) Anmeldetag: 18.12.2019
(51) Int. Cl.: G07C 5/00, G07C 5/08

(54) **VERFAHREN ZUM BESTIMMEN VON BAUTEIL- ODER BAUGRUPPENTOLERANZEN**
METHOD FOR DETERMINING TOLERANCES OF COMPONENTS OR ASSEMBLIES
PROCÉDÉ DE DÉTERMINATION DE TOLÉRANCES LIÉES AUX COMPOSANTS OU SOUS-ENSEMBLES

(30) Priorität: 20.12.2018 DE 102018222519
(43) Veröffentlichungstag der Anmeldung: 27.10.2021
(73) Patentinhaber: ZF Friedrichshafen AG, 88046 Friedrichshafen (DE)
(72) Erfinder: STRAUB, Joachim, 88079 Kressbronn (DE); HOFFMANN, Alexander, 66822 Lebach (DE)
(86) Internationale Anmeldenummer: PCT/EP2019/085825
(87) Internationale Veröffentlichungsnummer: WO 2020/127403

(56) Entgegenhaltungen:
- EP-A1- 2 631 878
- DE-A1- 10 148 214
- DE-A1- 10 238 475
- DE-A1- 102014 209 096
- DE-A1- 19 643 305

## Beschreibung

Die Erfindung betrifft ein Verfahren zum Bestimmen von Bauteil- oder Baugruppentoleranzen, bei dem im laufenden Fahrbetrieb die Bauteile oder Baugruppen typgleicher Kraftfahrzeuge zumindest periodisch überwacht und dabei Zustandsdaten messtechnisch erfasst werden.

Die Erfindung betrifft ferner ein System zum Bestimmen von Bauteil- oder Baugruppentoleranzen, welches im laufenden Fahrbetrieb die Bauteile oder Baugruppen typgleicher Kraftfahrzeuge zumindest periodisch überwacht und dabei Zustandsdaten erfasst.

Moderne, drahtlose Kommunikationswege ermöglichen es, einzelne Kraftfahrzeuge, etwa PKW oder LKW, im laufenden Fahrbetrieb mittels im Fahrzeug vorhandener Sensorik zu überwachen, auf diese Weise Fahrzeugzustandsdaten zu erfassen und diese Daten über die vorhandenen Kommunikationswege einer zentralen Überwachung und Analyse zur Verfügung zu stellen. Die Überwachung und Analyse kann z.B., wie dies in der EP 2 607 144 A1 beschrieben ist, über einen Zentralrechner des jeweiligen Fahrzeugherstellers erfolgen. Über die Fahrzeugzustandsdaten lassen sich Betriebszustände des Fahrzeugs feststellen und daraus Hinweise an den Fahrer ableiten. Zum Beispiel kann dem Fahrer mitgeteilt werden, dass sein Fahrzeug einen Service braucht, auch außerhalb der festgelegten Serviceintervalle. Weitere Verfahren und Systemen aus dem Stand der Technik sind aus der EP2631878 A1, DE102014209096 A1 und DE10148214 A1 bekannt.

Die Kenntnis der aktuellen Fahrzeugzustandsdaten kann aber auch für Fahrzeughersteller und deren Zulieferer von Interesse sein. Deren Interesse ist es, die Fahrzeuge bzw. deren zugelieferte Komponenten möglichst preisgünstig herstellen zu können. Ein wichtiger Kostenfaktor in Produktion und Herstellung sind die in der Fertigung verwendeten, zumeist vorgegebenen Toleranzen der verwendeten Bauteile, Baugruppen oder auch die Toleranzen im Zusammenwirken von Bauteilen oder Baugruppen. Oft gelten die Toleranzen für alle Bauteilgruppen gleich, beruhen auf Annahmen und werden daher nicht wirklich bedarfsgerecht vorgegeben. Das Einhalten von zu engen Toleranzen in Produktion und Fertigung verursacht Kosten und Aufwand und kann unwirtschaftlich sein.

Kommt es zu Problemen aufgrund von Bauteilabweichungen in der laufenden Produktion, kann oft nicht bedarfsgerecht für jedes Bauteil oder jede Bauteilgruppe separat entschieden werden, da für Entscheidungen über optimale Toleranzen oftmals nicht alle erforderlichen Informationen zur Verfügung stehen.

Es ist daher Ziel der Erfindung, bei der Bestimmung von verbindlichen Größen der Bauteildimensionierung und der Baugruppendimensionierung zusätzliche Informationsquellen nutzen zu können, und dadurch zu einer besseren Prognose hinsichtlich noch tolerierbarer Größenabweichungen bei der Bauteil- bzw. der Baugruppendimensionierung zu gelangen. Angestrebt ist das Bestimmen von Toleranzen, die möglichst nah am Optimum zwischen geringem Kostenaufwand einerseits und erhöhter Anfälligkeit für späteren Verschleiß oder Schadenshäufigkeit andererseits liegen. Zur Lösung dieser Aufgabe wird ein Verfahren zum Bestimmen von Bauteil- oder Baugruppentoleranzen mit den Merkmalen des Patentanspruchs 1 vorgeschlagen. Ferner wird ein System zum Bestimmen von Bauteil- oder Baugruppentoleranzen mit den Merkmalen des Patentanspruchs 11 vorgeschlagen.

Bei dem Verfahren werden
- im laufenden Fahrbetrieb die Bauteile oder Baugruppen typgleicher Fahrzeuge bzw. Kraftfahrzeuge, die eine Fahrzeugflotte bilden, zumindest periodisch überwacht und dabei Zustandsdaten messtechnisch erfasst, welche für Toleranzen an den Bauteilen oder Baugruppen charakteristisch sind,
- die Zustandsdaten über vorhandene, drahtlose Kommunikationswege einem Zentralrechner oder einer Cloud übermittelt und darin zusammen mit einer für das einzelne Fahrzeug individuellen Kennung abgespeichert,
- in einer Datenverarbeitung die abgespeicherten Zustandsdaten analysiert, daraus Istwerte der an den erfassten Fahrzeugen vorhandenen Toleranzen errechnet, und auf Grundlage der so gesammelten Istwerte für den jeweiligen Fahrzeugtyp allgemeingültige Größen der Bauteil- bzw. der Baugruppendimensionierung bestimmt, wobei die allgemeingültigen Grössen Toleranzen zu den bei der Produktion einzuhaltenden Dimensionierungen umfassen,
- die Datenverarbeitung bei der Bestimmung allgemeingültiger Größen der Bauteil- bzw. der Baugruppendimensionierung auf einzelne Kraftfahrzeuge des Fahrzeugtyps betreffende technische Einstelldaten zugreift und
- die Kommunikationswege auch eine Informationsübertragung von Betriebseinstellungen von dem Zentralrechner oder der Cloud an einzelne Kraftfahrzeuge umfassen, um an den Kraftfahrzeugen Betriebseinstellungen vorzunehmen oder diese zu verändern, um einzelne Baugruppen der im Feld betriebenen Kraftfahrzeuge, im Wege eines Stichversuchs über den Zentralrechner bzw. die Cloud zu beeinflussen, um so zu Rückschlüssen auf die tatsächliche Sensibilität in Bezug auf die bestimmten Toleranzen zu gelangen, und wobei erst nach positiver Bestätigung aufgrund des messtechnisch überprüften Fahrverhaltens des einzelnen Kraftfahrzeugs die ermittelten Versuchsergebnisse bei einem Teil der Fahrzeugflotte angewendet werden und wobei erst wenn auch von diesem Teil der Fahrzeugflotte anhand der dort erfassten Daten eine positive Bestätigung der Massnahme vorliegt, die neue Toleranz allgemein festgelegt wird.

Für das Bestimmen verbindlicher Größen der Bauteildimensionierung und der Baugruppendimensionierung werden daher zusätzliche Informationsquellen genutzt, um so zu einer besseren Prognose hinsichtlich noch tolerierbarer Größenabweichungen bei der Bauteil- bzw. der Baugruppendimensionierung zu gelangen. Es lassen sich somit Toleranzen herleiten, die nah am Optimum zwischen geringem Kostenaufwand einerseits und erhöhter Anfälligkeit für späteren Verschleiß oder Schadenshäufigkeit andererseits liegen.

Es erfolgt eine Feldüberwachung von Fahrzeugen insofern, als nicht nur ein einzelnes Fahrzeug einer zumindest periodischen Überwachung unterliegt, sondern ebenso eine Vielzahl weiterer Fahrzeuge des gleichen Fahrzeugtyps. Mit dem gleichen Fahrzeugtyp bzw. mit typgleichen Fahrzeugen sind jene Kraftfahrzeuge gemeint, in denen ebenfalls diese oder gleichartige Bauteile bzw. Baugruppen verbaut sind.

Überwacht werden mittels im Fahrzeug vorhandener Sensorik Zustandsdaten, welche charakteristisch für die Toleranzen der Bauteile, Baugruppen oder für Toleranzen im Zusammenwirken von Bauteilen oder Baugruppen sind. Dies kann z. B. eine relative Beweglichkeit der Bauteile zueinander sein, oder deren Schwingungsverhalten, oder deren akustisches Verhalten oder andere messtechnisch erfassbare Eigenschaften, bei deren Kenntnis und Analyse sich Rückschlüsse auf die mechanischen oder auch schaltungstechnischen Toleranzen einzelner Fahrzeugteile oder Gruppen von Fahrzeugteilen ziehen lassen.

Eine bevorzugte Anwendung sind die Komponenten des Fahrzeug-Antriebsstrangs, vor allem das Schaltgetriebe und die Kupplung des Fahrzeugs und die Toleranzen an deren Bauteilen und Bauteilgruppen.

Die Überwachung und Erfassung der Zustandsdaten erfolgt mittels Sensoren, Messfühlern oder dergleichen bordeigenen Vorrichtungen der Fahrzeuge, und erfolgt entweder in kleineren oder in größeren Zeitabständen, d. h. periodisch. Ebenso möglich ist es, bei entsprechend größerer Datenmenge eine laufende und somit kontinuierliche Überwachung durchzuführen.

Die so direkt im jeweiligen Fahrzeug erfassten Zustandsdaten werden über vorhandene, drahtlose Kommunikationswege an den Zentralrechner oder die Cloud übermittelt. Dabei ist die Zuordnung der übermittelten Zustandsdaten zu einem bestimmten Fahrzeug wichtig. Um die erfassten Daten bestimmten, in dem Fahrzeug verbauten Bauteilen oder Komponenten zuordnen zu können, werden die Zustandsdaten in dem Zentralrechner oder der Cloud zusammen mit einer für das jeweilige Fahrzeug individuellen Kennung abgespeichert.

Die individuelle Kennung kann z. B. ein fahrzeugindividueller Digitalcode sein, evtl. ergänzt um einen Code, welcher für den jeweiligen Fahrzeugtyp oder für eine bestimmte überwachte Komponente im Fahrzeug steht, etwa für die konkret in dem Fahrzeug verbaute Getriebe- oder Kupplungseinheit.

Die Datenverarbeitung, welche Bestandteil des Zentralrechners sein kann oder mit diesem/dieser oder mit der Cloud kommuniziert, analysiert die abgespeicherten Zustandsdaten. In der Datenverarbeitung werden daraus Istwerte der vorhandenen Toleranzen an den überwachten Getriebe- oder Kupplungseinheiten errechnet. In die Berechnungen sollten möglichst viele erfasste Zustandsdaten eingehen, da auch das Toleranzverhalten von Bauteilen oder Baugruppen von Fahrzeugen üblicherweise vielen Einflussfaktoren unterliegt.

Im System werden auf Grundlage aller so errechneten Ist-Toleranzen allgemeingültige Größen der Bauteile- bzw. der Baugruppendimensionierung für den betreffenden Fahrzeugtyp bestimmt.

Solche allgemeingültigen Größen können z. B. Bauteilmaße sein, vor allem aber Toleranzen und Toleranzspektren zu den bei der Produktion und Fertigung einzuhaltenden technischen Größen oder Dimensionierungen. Auch ein Bewegungsspiel kann, vor allem bei Fahrzeuggetrieben oder Kupplungen, Gegenstand der Toleranzbestimmung und -vorgabe sein.

Die Datenverarbeitung kann bei der Bestimmung allgemeingültiger Größen der Bauteil- bzw. der Baugruppendimensionierung auch auf den Fahrzeugtyp betreffende Produktionsdaten zugreifen, oder auf den Fahrzeugtyp betreffende technische Daten zugelieferter Bauteile oder Baugruppen.

Die Datenverarbeitung kann bei der Bestimmung allgemeingültiger Größen der Bauteil- bzw. der Baugruppendimensionierung auch auf den Fahrzeugtyp betreffende Werkstatt- und Servicedaten zugreifen.

Die Datenverarbeitung kann bei der Bestimmung allgemeingültiger Größen der Bauteil- bzw. der Baugruppendimensionierung auch auf den Fahrzeugtyp betreffende Prüfstandsdaten und Daten aus typbezogenen Testreihen zugreifen.

Die Datenverarbeitung kann bei der Bestimmung allgemeingültiger Größen der Bauteil- bzw. der Baugruppendimensionierung auch auf einzelne Fahrzeuge des Fahrzeugtyps betreffende Daten zum Produktionszeitraum und zur Produktionscharge zugreifen.

Die Datenverarbeitung kann bei der Bestimmung allgemeingültiger Größen der Bauteil- bzw. der Baugruppendimensionierung auch auf einzelne Fahrzeuge des Fahrzeugtyps betreffende Daten zu der Laufzeit oder der Betriebsdauer des Fahrzeugs zugreifen.

Die Datenverarbeitung kann bei der Bestimmung allgemeingültiger Größen der Bauteil- bzw. der Baugruppendimensionierung auch auf einzelne Fahrzeuge des Fahrzeugtyps betreffende technische Einstelldaten zugreifen.

Die Kommunikationswege umfassen auch eine Informationsübertragung von Betriebseinstellungen von dem Zentralrechner oder der Cloud an einzelne Fahrzeuge, um an den Fahrzeugen Betriebseinstellungen vorzunehmen oder Betriebseinstellungen zu verändern. Der Vornahme oder der Veränderung der Betriebseinstellungen kann eine Freigabefunktion vorgeschaltet sein, auf die der Fahrzeugnutzer Zugriff hat. Zum Beispiel hat der Fahrzeugnutzer über eine App Zugriff auf die Freigabefunktion.

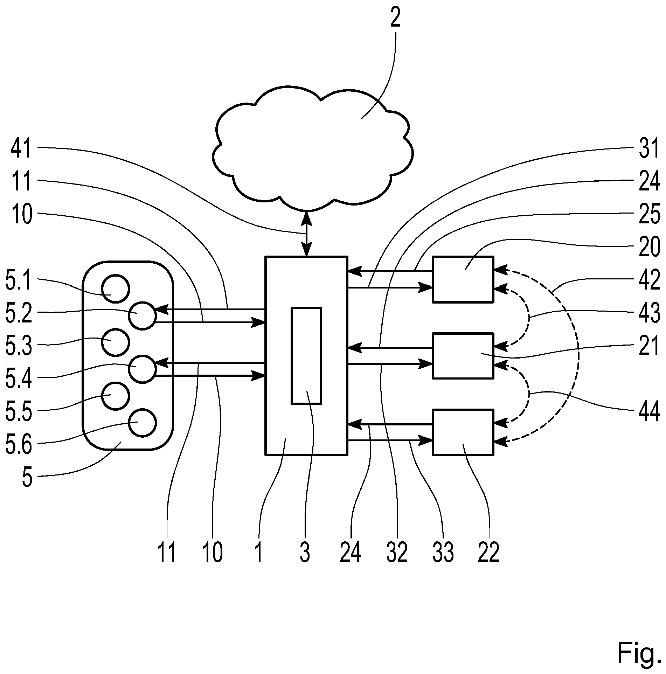

Im Folgenden wird ein Ausführungsbeispiel anhand der schematischen Figur näher erläutert, wobei gleiche oder ähnliche Elemente mit dem gleichen Bezugszeichen versehen sind. Die einzige Figur zeigt ein Systemschaubild für ein Verfahren zur Bestimmung von Bauteil- oder Baugruppentoleranzen. Mit baugleichen Bauteilen oder Baugruppen bestückte Kraftfahrzeuge 5.1 - 5.6 bilden eine Fahrzeugflotte 5. Diese Kraftfahrzeuge 5.1 - 5.6 sind mit Erfassungseinrichtungen, wie z. B. Sensoren versehen, mit denen sich Zustandsdaten an den verbauten Bauteilen bzw. Baugruppen erfassen lassen. Über vorhandene, drahtlose Kommunikationswege, wie z. B. Telematik gelangen die Zustandsdaten 10 vom einzelnen Kraftfahrzeug 5.1 - 5.6 zu einem Zentralrechner 1, der seinerseits über einen Datenaustausch 41 mit einer Cloud 2 kommunizieren kann.

Wenngleich primär Zustandsdaten 10 von den einzelnen Kraftfahrzeugen 5.1 - 5.6 zum Zentralrechner 1 gelangen, ist auch ein umgekehrter Datenweg vorhanden, bei dem der Zentralrechner Adaptionsdaten 11 an die Fahrzeugflotte 5 und vorzugsweise unmittelbar an die einzelnen Kraftfahrzeuge 5.1 - 5.6 übermittelt, um dort im jeweiligen Kraftfahrzeug 5.1 - 5.6 Betriebseinstellungen zu verändern.

Der Zentralrechner 1 ist außerdem im Datenaustausch mit mobilen Diensten, z. B. dem Kundendienst 20 des Fahrzeugherstellers. Denn auch dort stehen für Toleranzen charakteristische Daten zur Verfügung, und auch diese werden vom Zentralrechner 1 abgefragt. Vergleichbar liefert auch die Entwicklung 21 und die Produktion 22 Daten, z. B. Daten von Bauteilen oder Bauteilgruppen 24, zur Übermittlung an den Zentralrechner 1 und Einbeziehung in die Auswertung und Analyse. Ebenso kann auch der Kundendienst 20 weitere benötigte Daten 25 an den Zentralrechner 1 übermitteln.

Hierzu ist Bestandteil des Zentralrechners 1 eine Datenverarbeitung 3, deren Prozessor die abgespeicherten Fahrzeugzustandsdaten 10 und die weiteren Daten z. B. des Kundendienstes 20, der Entwicklung 21 und der Produktion 22 analysiert, daraus die tatsächlich vorhandenen Ist-Toleranzen in den Komponenten der einzelnen Kraftfahrzeuge 5.1 - 5.6 errechnet, und auf Grundlage der so für eine Vielzahl von Kraftfahrzeugen 5.1 - 5.6 errechneten Ist-Toleranzen für den jeweiligen Fahrzeugtyp 5 allgemeingültige Größen der Bauteil- bzw. der Baugruppendimensionierung bestimmt.

Die so bestimmten Größen gelangen dann als Vorgaben oder Empfehlungen 31 von der Datenverarbeitung 3 im Zentralrechner 1 z. B. an den Kundendienst 20. Oder sie gelangen als Funktionsvorschläge 32 an die Fahrzeugentwicklung 21 oder als empfohlene Maßnahmen 33 an die Fahrzeugproduktion 22 beim Fahrzeughersteller selbst, oder bei dessen Zulieferer. Die Fahrzeugproduktion 22 kann über einen Datenaustausch 42 mit dem Kundendienst 20 kommunizieren. Ferner kann der Kundendienst 20 über einen Datenaustausch 43 mit der Entwicklung 21 kommunizieren. Des Weiteren kann die Fahrzeugproduktion 22 über einen Datenaustausch 44 mit der Entwicklung 21 kommunizieren.

Über den Beobachtungsmodus lassen sich z. B. Getriebeschaltungen und deren Schaltqualität durch Feldbeobachtung ermitteln, und die Daten lassen sich über den Zentralrechner 1 oder die Cloud 2 der Datenverarbeitung 3 zur Verfügung stellen, welche sich z. B. beim Fahrzeughersteller oder bei dessen Zulieferer befindet. Die Informationen sollten insbesondere in der Produktion oder in der Produktionssteuerung zusammenlaufen. Dies ermöglicht dort, über eine intelligente Datenauswertung eine optimierte Toleranz für jedes Bauteil im Sinne der Erzielung eines Optimums in Bezug auf Kosten und Qualität vorzugeben.

Über einen Datenaustausch mit der Getriebeproduktion beim Fahrzeughersteller oder bei dessen Lieferanten werden Rückschlüsse auf die optimale Größe der Toleranzen gezogen. Damit eröffnet sich die Möglichkeit, ohne Nachteile in Bezug auf Funktion, Verschleiß oder Lebensdauer bisher verwendete Toleranzen nicht nur enger zu tolerieren, sondern je nach Analyseergebnis auch weiter zu tolerieren, um so die Fertigungs- oder Produktionskosten zu senken. Da die Kraftfahrzeuge 5.1 - 5.6 im Feldbetrieb, also im laufenden Fahrbetrieb, überwacht werden, kann auch auf Bauabweichungen im Gesamtfeld der betriebenen Kraftfahrzeuge 5.1 - 5.6 adäquat reagiert werden.

Das betriebene Verfahren und System beruhen auf der Annahme, dass die Möglichkeiten des Datenaustausches auch zukünftig außergewöhnlich zunehmen werden, und hier keine technischen Grenzen absehbar sind.

In einer Ausgestaltung besteht die Möglichkeit, auf Grundlage der erfassten Fahrzeugzustandsdaten 10 und deren Analyse zu einem gegenseitigen Lernen zwischen der Fahrzeugflotte und der Produktion 22 beim Fahrzeughersteller oder dessen Zulieferer zu gelangen. So sind z. B. Daten zur Schaltqualität der Getriebeschaltung vorteilhaft bei der Auswertung. Im Prozessor der Datenverarbeitung 3 wird errechnet, welche Bauteile des Getriebes an der Grenze der bisher vorgegebenen Toleranzen liegen, und an welchen Bauteilen noch Toleranzspielraum besteht, so dass dort Kostenspareffekte möglich sind.

Durch Stichversuche in der Fahrzeugflotte wird das Risiko einer falschen Toleranzaufweitung verringert. Die Kommunikationswege umfassen zum Beispiel auch die Übertragung von Fahrzeugbetriebseinstellungen und Adaptionsdaten 11 von dem Zentralrechner 1 oder der Cloud 2 an das einzelne Fahrzeug 5.1 - 5.6, um dadurch an dem einzelnen Fahrzeug Betriebseinstellungen vorzunehmen oder diese zu verändern.

Es werden also einzelne Baugruppen des im Feld betriebenen Fahrzeugs, z. B. Getriebe oder Getriebesteuerungen, im Wege eines Stichversuchs über den Zentralrechner 1 bzw. die Cloud 2 beeinflusst, um so zu Rückschlüssen auf die tatsächliche Sensibilität in Bezug auf Toleranzen zu gelangen. Solche Toleranzen können Bauteilgrößen sein, oder auch, bei Fahrzeugkupplungen, die vorhandenen und die notwendigen Lüftspiele in Lammellenkupplungen.

Zum Beispiel kann durch ein schrittweises Anheben und eine Reduktion der Schnellfüllzeit unter gleichzeitiger Erfassung und damit Beobachtung der Schaltqualität testweise ermittelt werden, wie empfindlich die Befüllung einer Kupplung ist. In Abhängigkeit vom Ergebnis kann eine für die Zukunft allgemeingültige Größe der betreffenden Dimensionierung bestimmt werden. Zum Beispiel kann das Lüftspiel in der Produktion 22 aufgeweitet werden, aber auch, bei festgestellter Übertolerierung, eingeengt werden.

Erst nach positiver Bestätigung aufgrund des messtechnisch überprüften Fahrverhaltens des einzelnen Kraftfahrzeugs 5.1 - 5.6 werden die ermittelten Versuchsergebnisse auch für die zukünftige Produktion angewendet, z.B. bei einem Teil der Fahrzeugflotte. Erst wenn auch von diesem Teil der Fahrzeugflotte anhand der dort erfassten Daten eine positive Bestätigung der Maßnahme vorliegt, wird die neue Toleranz allgemein festgelegt bzw. bestimmt, indem z. B. die entsprechenden Maßnahmen in der Produktion 22 umgesetzt werden.

Durch das gezielte Nutzen von Produktionsdaten, z. B. Daten der Getriebeproduktion, können qualitätsrelevante Zustandsdaten beobachtet werden, und so Rückschlüsse auf die Qualität der verbauten Bauteile und deren Verwendbarkeit im Fall einer angenommenen Toleranzabweichung gezogen werden. Als Informationen verwertet werden Informationen zu Produkten oder Produktchargen von Zulieferern, z.B. Belaglamellen für Kupplungen, um Rückschlüsse auf Reibwertverläufe zu ziehen, Einstellwerte von Bauteilen, z.B. das Lüftspiel einer Kupplung, und Informationen vom Endprüfstand.

Toleranzen in der Produktion sind meistens schwingend in dem Sinne, dass eine größere Gruppe nacheinander verarbeiteter Bauteile dieselben Toleranzen aufweist, insbesondere dann, wenn diese Teile derselben Produktionscharge entstammen. Zum Beispiel haben gleiche Chargen von Kupplungslamellen einen vergleichbaren Verlauf der Reibwerte. Änderungen in den Toleranzen haben daher für alle Teile gleiche Auswirkungen.

Die erfassten Fahrzeugzustandsdaten 10 werden in dem Zentralrechner 1, z. B. beim Fahrzeughersteller, oder in der Cloud 2 gesammelt und gespeichert. Vorzugsweise wird für jede betroffene Komponente des Kraftfahrzeugs 5.1 - 5.6, z. B. des Fahrzeuggetriebes, ein virtueller Zwilling im Zentralrechner 1 abgelegt. Dieser virtuelle Zwilling spiegelt exakt die Verhältnisse an dem real existierenden Kraftfahrzeug 5.1 - 5.6, von dem die Daten stammen, wider. Im Zentralrechner 1 bzw. in der Cloud 2 erfolgt die ständige Aktualisierung der Fahrzeugzustandsdaten 10, vorzugsweise unter Verwendung weiterer Informationen aus der Fahrzeugflotte, der Produktion 22 wie z.B. der Getriebeproduktion, dem Kundendienst 20 und/oder der Entwicklung 21.

Im Zentralrechner 1 werden die Daten verarbeitet, analysiert und es werden Zusammenhänge ermittelt. Der Zentralrechner 1 leitet daraus Funktionen oder Algorithmen ab, oder auch Rückschlüsse oder Empfehlungen für zu ergreifende Maßnahmen. Die Maßnahmen können Direktmaßnahmen technischer Art sein, oder zunächst Empfehlungen an einen Personenkreis von Entscheidern. Auch Techniken der künstlichen Intelligenz können bei der Datenanalyse und -auswertung eingesetzt werden.

Eine Empfehlung oder empfohlene Maßnahme kann die Einengung oder im Gegenteil die Aufweitung einer Toleranz sein, oder die Übernahme der Veränderung für die zukünftige Produktion.

Um zu Aussagen hinsichtlich Toleranzaufweitungen zu kommen, ist eine Überwachung bis zum Lebenszeitende des jeweiligen Kraftfahrzeugs 5.1 - 5.6 oder der Fahrzeugkomponente vorgesehen. Die abgefragten Fahrzeugzustandsdaten 10 werden daher unter Berücksichtigung der Laufzeit der jeweiligen Fahrzeugkomponente gespeichert, und stehen dann als Entscheidungsgrundlage bei der Toleranzanpassung zur Verfügung. Diese Daten sind z.B.:
- aktuelle Adaptionswerte,
- bei Getriebeschaltungen Informationen zur Schaltqualität in den im Feldversuch befindlichen Fahrzeugen,
- Laufleistung oder Betriebsdauer des Fahrzeugs,
- Umweltinformationen wie z. B. Außentemperatur, Luftfeuchte, Luftdruck bzw. Höhe, in der sich das Fahrzeug bewegt,
- bei Getrieben und Kupplungen die Anzahl der Schaltungen.

Eine Toleranzanpassung durch Bestimmung veränderter, allgemeingültiger Größen der Bauteil- bzw. der Baugruppendimensionierung ist nicht sinnvoll, wenn mit den bisherigen Toleranzen verknüpfte Probleme bekannt sind. Um in einem solchen Fall keine Aussagen über eine Toleranzaufweitung zu machen, werden in der Cloud 2 oder im Zentralrechner 1 auch Informationen zu den einzelnen Fahrzeugen 5.1 - 5.6 zu aktuellen Problemen gespeichert. Dies können z.B. aktuelle Probleme mit der Qualität sein, Probleme bei bestimmten Komponenten, Ausfälle und deren Zeitpunkt, z.B. aufgrund gefahrener Kilometer, oder auch Verschleißdaten und der Zeitpunkt bzw. die Kilometerleistung bei deren Auftreten.

Die abgespeicherten Fahrzeugzustandsdaten 10 können, um nur durch den autorisierten Nutzer verwendbar zu sein, mittels Verschlüsselung anonymisiert werden.

### Bezugszeichen

- 1: Zentralrechner
- 2: Cloud
- 3: Datenverarbeitung
- 5: Fahrzeugtyp
- 5.1: Kraftfahrzeug
- 5.2: Kraftfahrzeug
- 5.3: Kraftfahrzeug
- 5.4: Kraftfahrzeug
- 5.5: Kraftfahrzeug
- 5.6: Kraftfahrzeug
- 10: Zustandsdaten
- 11: Adaptionsdaten
- 20: Kundendienst
- 21: Entwicklung
- 22: Produktion
- 24: Daten von Bauteilen oder Bauteilgruppen
- 25: Daten
- 31: Vorgaben oder Empfehlungen
- 32: Funktionsvorschläge
- 33: Maßnahmen
- 41: Datenaustausch
- 42: Datenaustausch
- 43: Datenaustausch
- 44: Datenaustausch

## Patentansprüche

1. Verfahren zum Bestimmen von Bauteil- oder Baugruppentoleranzen, bei dem
- im laufenden Fahrbetrieb die Bauteile oder Baugruppen typgleicher Kraftfahrzeuge (5.1 - 5.6), die eine Fahrzeugflotte bilden, zumindest periodisch überwacht und dabei Zustandsdaten (10) messtechnisch erfasst werden, welche für Toleranzen an den Bauteilen oder Baugruppen charakteristisch sind,
- die Zustandsdaten (10) über vorhandene, drahtlose Kommunikationswege einem Zentralrechner (1) oder einer Cloud (2) übermittelt und darin zusammen mit einer für das einzelne Kraftfahrzeug (5.1 - 5.6) individuellen Kennung abgespeichert werden,
- in einer Datenverarbeitung (3) die abgespeicherten Zustandsdaten analysiert, daraus Istwerte der an den erfassten Kraftfahrzeugen (5.1 - 5.6) vorhandenen Toleranzen errechnet werden, und auf Grundlage der so gesammelten Istwerte für den jeweiligen Fahrzeugtyp (5) allgemeingültige Größen der Bauteil- bzw. der Baugruppendimensionierung bestimmt werden, **dadurch gekennzeichnet, dass** die allgemeingültigen Grössen Toleranzen und Toleranzspektren zu den bei der Produktion einzuhaltenden Dimensionierungen umfassen, wobei
- die Datenverarbeitung (3) bei der Bestimmung allgemeingültiger Größen der Bauteil- bzw. der Baugruppendimensionierung auf einzelne Kraftfahrzeuge (5.1 - 5.6) des Fahrzeugtyps (5) betreffende technische Einstelldaten zugreift und wobei
- die Kommunikationswege auch eine Informationsübertragung von Betriebseinstellungen von dem Zentralrechner (1) oder der Cloud (2) an einzelne Kraftfahrzeuge (5.1 - 5.6) umfassen, um an den Kraftfahrzeugen (5.1 - 5.6) Betriebseinstellungen vorzunehmen oder diese zu verändern, um einzelne Baugruppen der im Feld betriebenen Kraftfahrzeuge, im Wege eines Stichversuchs über den Zentralrechner (1) bzw. die Cloud (2) zu beeinflussen, um so zu Rückschlüssen auf die tatsächliche Sensibilität in Bezug auf die bestimmten Toleranzen zu gelangen, und wobei erst nach positiver Bestätigung aufgrund des messtechnisch überprüften Fahrverhaltens des einzelnen Kraftfahrzeugs (5.1 - 5.6) die ermittelten Versuchsergebnisse bei einem Teil der Fahrzeugflotte angewendet werden und wobei erst wenn auch von diesem Teil der Fahrzeugflotte anhand der dort erfassten Daten eine positive Bestätigung der Massnahme vorliegt, die neue Toleranz allgemein festgelegt wird.

2. Verfahren nach Anspruch 1, **dadurch gekennzeichnet, dass** die Datenverarbeitung (3) bei der Bestimmung allgemeingültiger Größen der Bauteil- bzw. der Baugruppendimensionierung auf den Fahrzeugtyp (5) betreffende Produktionsdaten zugreift.

3. Verfahren nach einem der vorangehenden Ansprüche, **dadurch gekennzeichnet, dass** die Datenverarbeitung (3) bei der Bestimmung allgemeingültiger Größen der Bauteil- bzw. der Baugruppendimensionierung auf den Fahrzeugtyp (5) betreffende technische Daten zugelieferter Bauteile oder Baugruppen zugreift.

4. Verfahren nach einem der vorangehenden Ansprüche, **dadurch gekennzeichnet, dass** die Datenverarbeitung (3) bei der Bestimmung allgemeingültiger Größen der Bauteil- bzw. der Baugruppendimensionierung auf den Fahrzeugtyp (5) betreffende technische Einstelldaten zugreift.

5. Verfahren nach einem der vorangehenden Ansprüche **dadurch gekennzeichnet, dass** die Datenverarbeitung (3) bei der Bestimmung allgemeingültiger Größen der Bauteil- bzw. der Baugruppendimensionierung auf den Fahrzeugtyp (5) betreffende Werkstatt- und Servicedaten zugreift.

6. Verfahren nach einem der vorangehenden Ansprüche **dadurch gekennzeichnet, dass** die Datenverarbeitung (3) bei der Bestimmung allgemeingültiger Größen der Bauteil- bzw. der Baugruppendimensionierung auf den Fahrzeugtyp (5) betreffende Prüfstandsdaten und Daten aus typbezogenen Testreihen zugreift.

7. Verfahren nach einem der vorangehenden Ansprüche **dadurch gekennzeichnet, dass** die Datenverarbeitung (3) bei der Bestimmung allgemeingültiger Größen der Bauteil- bzw. der Baugruppendimensionierung auf einzelne Kraftfahrzeuge (5.1 - 5.6) des Fahrzeugtyps (5) betreffende Daten zum Produktionszeitraum und zur Produktionscharge zugreift.

8. Verfahren nach einem der vorangehenden Ansprüche **dadurch gekennzeichnet, dass** die Datenverarbeitung (3) bei der Bestimmung allgemeingültiger Größen der Bauteil- bzw. der Baugruppendimensionierung auf einzelne Kraftfahrzeuge (5.1 - 5.6) des Fahrzeugtyps (5) betreffende Daten zu der Laufzeit oder der Betriebsdauer des Kraftfahrzeugs (5.1 - 5.6) zugreift.

9. Verfahren nach einem der vorhergehenden Ansprüche, **dadurch gekennzeichnet, dass** der Vornahme oder der Veränderung der Betriebseinstellungen eine Freigabefunktion vorgeschaltet ist, auf die der Fahrzeugnutzer Zugriff hat.

10. Verfahren nach Anspruch 9, **dadurch gekennzeichnet, dass** der Fahrzeugnutzer über eine App Zugriff auf die Freigabefunktion hat.

11. System zum Bestimmen von Bauteil- oder Baugruppentoleranzen zur Durchführung des Verfahrens nach einem der vorangehenden Ansprüche,
- mit Erfassungsmitteln, die dazu vorgesehen sind, im laufenden Fahrbetrieb die Bauteile oder Baugruppen typgleicher Kraftfahrzeuge (5.1 - 5.6), die eine Fahrzeugflotte bilden, zumindest periodisch zu überwachen und dabei Zustandsdaten (10) messtechnisch zu überwachen, welche für Toleranzen an den Bauteilen oder Baugruppen charakteristisch sind,
- mit einer Datenübermittlung und einem Zentralrechner (1) oder einer Cloud (2), wobei die Datenübermittlung dazu vorgesehen ist, die Zustandsdaten (10) über vorhandene, drahtlose Kommunikationswege dem Zentralrechner (1) oder der Cloud (2) zu übermitteln, wobei die Zustandsdaten (10) in dem Zentralrechner (1) oder der Cloud (2) zusammen mit einer für das einzelne Kraftfahrzeug (5.1 - 5.6) individuellen Kennung abspeichert werden, **gekennzeichnet durch**
- eine Datenverarbeitung (3), die dazu vorgesehen ist, die abgespeicherten Zustandsdaten zu analysieren, daraus Istwerte der an den erfassten Kraftfahrzeugen (5.1 - 5.6) vorhandenen Toleranzen zu errechnen, und auf Grundlage der so gesammelten Istwerte für den jeweiligen Fahrzeugtyp (5) allgemeingültige Größen der Bauteil- bzw. der Baugruppendimensionierung zu bestimmen, wobei die allgemeingültigen Grössen Toleranzen und Toleranzspektren zu den bei der Produktion einzuhaltenden Dimensionierungen umfassen,
- wobei die Datenverarbeitung (3) dazu vorgesehen ist, bei der Bestimmung allgemeingültiger Größen der Bauteil- bzw. der Baugruppendimensionierung auf einzelne Kraftfahrzeuge (5.1 - 5.6) des Fahrzeugtyps (5) betreffende technische Einstelldaten zugreift und wobei
- die Datenübermittlung dazu vorgesehen ist, dass die Kommunikationswege auch eine Informationsübertragung von Betriebseinstellungen von dem Zentralrechner (1) oder der Cloud (2) an einzelne Kraftfahrzeuge (5.1 - 5.6) umfassen, um an den Kraftfahrzeugen (5.1 - 5.6) Betriebseinstellungen vorzunehmen oder diese zu verändern, um einzelne Baugruppen der im Feld betriebenen Kraftfahrzeuge, im Wege eines Stichversuchs über den Zentralrechner 1 bzw. die Cloud 2 zu beeinflussen, um so zu Rückschlüssen auf die tatsächliche Sensibilität in Bezug auf die bestimmten Toleranzen zu gelangen, und wobei erst nach positiver Bestätigung aufgrund des messtechnisch überprüften Fahrverhaltens des einzelnen Kraftfahrzeugs (5.1 - 5.6) die ermittelten Versuchsergebnisse bei einem Teil der Fahrzeugflotte angewendet werden und wobei erst wenn auch von diesem Teil der Fahrzeugflotte anhand der dort erfassten Daten eine positive Bestätigung der Massnahme vorliegt, die neue Toleranz allgemein festgelegt wird.

## Claims

1. Method for determining component or assembly tolerances, in which
- during ongoing driving operation, the components or assemblies of motor vehicles (5.1 - 5.6) of the same type which form a vehicle fleet are monitored at least periodically and state data (10) which are characteristic of tolerances on the components or assemblies are captured by measurement,
- the state data (10) are transmitted via existing wireless communication paths to a central computer (1) or a cloud (2) and are stored therein together with an identifier that is specific to the individual motor vehicle (5.1 - 5.6),
- the stored state data are analysed in a data processing operation (3), actual values of the tolerances present on the captured motor vehicles (5.1 - 5.6) are calculated therefrom, and generally valid variables of the component or the assembly dimensioning are determined on the basis of the actual values thus collected for the respective vehicle type (5), **characterized in that** the generally valid variables comprise tolerances and tolerance spectra with respect to the dimensions to be complied with during production, wherein
- the data processing operation (3) accesses technical setting data relating to individual motor vehicles (5.1 - 5.6) of the vehicle type (5) when determining generally valid variables of the component or the assembly dimensioning, and wherein
- the communication paths also comprise an information transmission of operating settings from the central computer (1) or the cloud (2) to individual motor vehicles (5.1 - 5.6) in order to make or change operating settings on the motor vehicles (5.1 - 5.6) in order to influence individual assemblies of the motor vehicles operated in the field by way of a random test via the central computer (1) or the cloud (2), in order thus to arrive at conclusions about the actual sensitivity in relation to the determined tolerances, and wherein the test results determined are applied to a part of the vehicle fleet only after positive confirmation on the basis of the driving behaviour of the individual motor vehicle (5.1 - 5.6) that has been checked by measurement, and wherein the new tolerance is generally defined only when there is also a positive confirmation of the measure from this part of the vehicle fleet on the basis of the data captured there.

2. Method according to Claim 1, **characterized in that** the data processing operation (3) accesses production data relating to the vehicle type (5) when determining generally valid variables of the component or the assembly dimensioning.

3. Method according to one of the preceding claims, **characterized in that** the data processing operation (3) accesses technical data for supplied components or assemblies relating to the vehicle type (5) when determining generally valid variables of the component or the assembly dimensioning.

4. Method according to one of the preceding claims, **characterized in that** the data processing operation (3) accesses technical setting data relating to the vehicle type (5) when determining generally valid variables of the component or the assembly dimensioning.

5. Method according to one of the preceding claims, **characterized in that** the data processing operation (3) accesses workshop and service data relating to the vehicle type (5) when determining generally valid variables of the component or the assembly dimensioning.

6. Method according to one of the preceding claims, **characterized in that** the data processing operation (3) accesses test bench data and data from type-related test series relating to the vehicle type (5) when determining generally valid variables of the component or the assembly dimensioning.

7. Method according to one of the preceding claims, **characterized in that** the data processing operation (3) accesses data for the production period and the production batch relating to individual motor vehicles (5.1 - 5.6) of the vehicle type (5) when determining generally valid variables of the component or the assembly dimensioning.

8. Method according to one of the preceding claims, **characterized in that** the data processing operation (3) accesses data for the running time or the operating duration of the motor vehicle (5.1 - 5.6) relating to individual motor vehicles (5.1 - 5.6) of the vehicle type (5) when determining generally valid variables of the component or the assembly dimensioning.

9. Method according to one of the preceding claims, **characterized in that** an enabling function, to which the vehicle user has access, is connected upstream of the making or the changing of the operating settings.

10. Method according to Claim 9, **characterized in that** the vehicle user has access to the enabling function via an app.

11. System for determining component or assembly tolerances for carrying out the method according to one of the preceding claims,
- having capture means which are provided, during ongoing driving operation, for the purpose of monitoring at least periodically the components or assemblies of motor vehicles (5.1 - 5.6) of the same type which form a vehicle fleet and monitoring by measurement state data (10) which are characteristic of tolerances on the components or assemblies,
- having a data transmission means and a central computer (1) or a cloud (2), wherein the data transmission means is provided for the purpose of transmitting the state data (10) to the central computer (1) or the cloud (2) via existing wireless communication paths, wherein the state data (10) are stored in the central computer (1) or the cloud (2) together with an identifier that is specific to the individual motor vehicle (5.1 - 5.6), **characterized by**
- a data processing operation (3) which is provided for the purpose of analysing the stored state data, calculating actual values of the tolerances present on the captured motor vehicles (5.1 - 5.6) therefrom, and determining generally valid variables of the component or the assembly dimensioning on the basis of the actual values thus collected for the respective vehicle type (5), wherein the generally valid variables comprise tolerances and tolerance spectra with respect to the dimensions to be complied with during production,
- wherein the data processing operation (3) is intended to access technical setting data relating to individual motor vehicles (5.1 - 5.6) of the vehicle type (5) when determining generally valid variables of the component or the assembly dimensioning, and wherein
- the data transmission means is provided such that communication paths also comprise an information transmission of operating settings from the central computer (1) or the cloud (2) to individual motor vehicles (5.1 - 5.6) in order to make or change operating settings on the motor vehicles (5.1 - 5.6) in order to influence individual assemblies of the motor vehicles operated in the field by way of a random test via the central computer 1 or the cloud 2, in order thus to arrive at conclusions about the actual sensitivity in relation to the determined tolerances, and wherein the test results determined are applied to a part of the vehicle fleet only after positive confirmation on the basis of the driving behaviour of the individual motor vehicle (5.1 - 5.6) that has been checked by measurement, and wherein the new tolerance is generally defined only when there is also a positive confirmation of the measure from this part of the vehicle fleet on the basis of the data captured there.

## Revendications

1. Procédé pour déterminer des tolérances de composants ou de sous-ensembles, avec lequel
- en mode de déplacement en cours, les composants ou les sous-ensembles de véhicules automobiles (5.1 - 5.6) de même type qui forment une flotte de véhicules sont surveillés au moins périodiquement, et des données d'état (10), qui sont caractéristiques des tolérances des composants ou des sous-ensembles, sont alors acquises par métrologie,
- les données d'état (10) sont communiquées à un ordinateur central (1) ou à un cloud (2) par le biais de voies de communication sans fil existantes, puis y sont mémorisées conjointement avec un identifiant propre au véhicule automobile (5.1 - 5.6) individuel,
- dans un traitement de données (3), les données d'état mémorisées sont analysées, les valeurs réelles des tolérances présentes sur les véhicules automobiles (5.1 - 5.6) acquis sont calculées à partir de celles-ci et, sur la base des valeurs réelles ainsi collectées pour le type de véhicule (5) respectif, des grandeurs universellement valables pour le dimensionnement des composants ou des sous-ensembles sont déterminées, **caractérisé en ce que** les grandeurs universellement valables comprennent des tolérances et des spectres de tolérance relatifs aux dimensionnements à respecter lors de la production,
- le traitement des données (3), lors de la détermination des grandeurs universellement valables pour le dimensionnement des composants ou des sous-ensembles, accédant à des données de réglage techniques qui concernent les véhicules automobiles (5.1 - 5.6) individuels du type de véhicule (5), et
- les voies de communication comprenant également une transmission d'informations relatives aux réglages opérationnels de l'ordinateur central (1) ou du cloud (2) vers les véhicules automobiles (5.1 - 5.6) individuels, afin d'effectuer des réglages opérationnels sur les véhicules automobiles (5.1 - 5.6) ou de modifier ceux-ci, en vue d'influencer des sous-ensembles individuels des véhicules automobiles exploités sur le terrain, au moyen d'un échantillonnage par le biais de l'ordinateur central (1) ou du cloud (2), et ainsi tirer des conclusions sur la sensibilité réelle par rapport aux tolérances déterminées, et les résultats d'essai déterminés n'étant appliqués qu'avec une partie de la flotte de véhicules seulement après une confirmation positive fondée sur le comportement routier vérifié métrologiquement du véhicule automobile (5.1 - 5.6) individuel, et la nouvelle tolérance n'étant spécifiée de manière générale que lorsqu'il existe également une confirmation positive de la mesure par cette partie de la flotte de véhicules à l'aide des données qui y sont acquises.

2. Procédé selon la revendication 1, **caractérisé en ce que** le traitement de données (3), lors de la détermination des grandeurs universellement valables du dimensionnement des composants ou des sous-ensembles, accède aux données de production concernant le type de véhicule (5).

3. Procédé selon l'une des revendications précédentes, **caractérisé en ce que** le traitement de données (3), lors de la détermination des grandeurs universellement valables du dimensionnement des composants ou des sous-ensembles, accède aux données techniques des composants ou sous-ensembles fournis concernant le type de véhicule (5).

4. Procédé selon l'une des revendications précédentes, **caractérisé en ce que** le traitement de données (3), lors de la détermination des grandeurs universellement valables du dimensionnement des composants ou des sous-ensembles, accède aux données de réglage techniques concernant le type de véhicule (5).

5. Procédé selon l'une des revendications précédentes, **caractérisé en ce que** le traitement de données (3), lors de la détermination des grandeurs universellement valables du dimensionnement des composants ou des sous-ensembles, accède aux données d'atelier et d'entretien concernant le type de véhicule (5).

6. Procédé selon l'une des revendications précédentes, **caractérisé en ce que** le traitement de données (3), lors de la détermination des grandeurs universellement valables du dimensionnement des composants ou des sous-ensembles, accède aux données de banc d'essais et aux données issues des séries de tests relatives au type concernant le type de véhicule (5).

7. Procédé selon l'une des revendications précédentes, **caractérisé en ce que** le traitement de données (3), lors de la détermination des grandeurs universellement valables du dimensionnement des composants ou des sous-ensembles, accède aux données relatives à la période de production et à la charge de production concernant les véhicules automobiles (5.1 - 5.6) individuels du type de véhicule (5).

8. Procédé selon l'une des revendications précédentes, **caractérisé en ce que** le traitement de données (3), lors de la détermination des grandeurs universellement valables du dimensionnement des composants ou des sous-ensembles, accède aux données relatives à la durée de vie ou à la durée de fonctionnement du véhicule automobile (5.1 - 5.6) concernant les véhicules automobiles (5.1 - 5.6) individuels du type de véhicule (5).

9. Procédé selon l'une des revendications précédentes, **caractérisé en ce que** la définition ou la modification des réglages opérationnels est précédée d'une fonction d'autorisation à laquelle l'utilisateur du véhicule a accès.

10. Procédé selon la revendication 9, **caractérisé en ce que** l'utilisateur du véhicule a accès à la fonction d'autorisation par le biais d'une application.

11. Système de détermination de tolérances de composants ou de sous-ensembles destiné à la mise en œuvre du procédé selon l'une des revendications précédentes,
- comprenant des moyens d'acquisition qui sont prévus pour, en mode de déplacement en cours, surveiller au moins périodiquement les composants ou les sous-ensembles de véhicules automobiles (5.1 - 5.6) de même type qui forment une flotte de véhicules, et surveille ici par métrologie des données d'état (10) qui sont caractéristiques des tolérances des composants ou des sous-ensembles,
- comprenant une communication de données et un ordinateur central (1) ou un cloud (2), la communication de données étant prévue pour communiquer les données d'état (10) à l'ordinateur central (1) ou au cloud (2) par le biais de voies de communication sans fil existantes, les données d'état (10) étant mémorisées dans l'ordinateur central (1) ou dans le cloud (2) conjointement avec un identifiant propre au véhicule automobile (5.1 - 5.6) individuel, **caractérisé par**
- un traitement de données (3), qui est prévu pour analyser les données d'état mémorisées, calculer à partir de celles-ci les valeurs réelles des tolérances présentes sur les véhicules automobiles (5.1 - 5.6) acquis et, sur la base des valeurs réelles ainsi collectées pour le type de véhicule (5) respectif, déterminer des grandeurs universellement valables pour le dimensionnement des composants ou des sous-ensembles, les grandeurs universellement valables comprenant des tolérances et des spectres de tolérance relatifs aux dimensionnements à respecter lors de la production,
- le traitement des données (3) étant prévu pour, lors de la détermination des grandeurs universellement valables pour le dimensionnement des composants ou des sous-ensembles, accéder à des données de réglage techniques qui concernent les véhicules automobiles (5.1 - 5.6) individuels du type de véhicule (5), et
- la communication de données étant prévue pour que les voies de communication comprennent également une transmission d'informations relatives aux réglages opérationnels de l'ordinateur central (1) ou du cloud (2) vers les véhicules automobiles (5.1 - 5.6) individuels, afin d'effectuer des réglages opérationnels sur les véhicules automobiles (5.1 - 5.6) ou de modifier ceux-ci, en vue d'influencer des sous-ensembles individuels des véhicules automobiles exploités sur le terrain, au moyen d'un échantillonnage par le biais de l'ordinateur central (1) ou du cloud (2), et ainsi tirer des conclusions sur la sensibilité réelle par rapport aux tolérances déterminées, et les résultats d'essai déterminés n'étant appliqués qu'avec une partie de la flotte de véhicules seulement après une confirmation positive fondée sur le comportement routier vérifié métrologiquement du véhicule automobile (5.1 - 5.6) individuel, et la nouvelle tolérance n'étant spécifiée de manière générale que lorsqu'il existe également une confirmation positive de la mesure par cette partie de la flotte de véhicules à l'aide des données qui y sont acquises.
